Europäisches Patentamt

European Patent Office

Office européen des brevets

(11) Publication number: **0 488 429 A2**

# EUROPEAN PATENT APPLICATION

(21) Application number: **91202048.4**

(51) Int. Cl.5: **C21B 13/14**, C21B 13/00

(22) Date of filing: **08.08.91**

(30) Priority: **26.11.90 JP 318064/90**

(43) Date of publication of application:
**03.06.92 Bulletin 92/23**

(84) Designated Contracting States:
**AT DE FR GB**

(71) Applicant: **MITSUBISHI JUKOGYO KABUSHIKI KAISHA**
**5-1, Marunouchi 2-chome Chiyoda-ku Tokyo(JP)**

(72) Inventor: **Ohtawa, Kimiaki, c/o Hiroshima Machinery Works**
**Mitsubishi Jukogyo KK, 6-22 Kanonshi-machi 4-chome**

**Nishi-ku, Hiroshima, Hiroshima Pref.(JP)**
Inventor: **Fukushima, Takeo, c/o Hiroshima Machinery Works**
**Mitsubishi Jukogyo KK, 6-22 Kanonshi-machi 4-chome**
**Nishi-ku, Hiroshima, Hiroshima Pref.(JP)**
Inventor: **Itano, Shigeo, c/o Hiroshima Machinery Works**
**Mitsubishi Jukogyo KK, 6-22 Kanonshi-machi 4-chome**
**Nishi-ku, Hiroshima, Hiroshima Pref.(JP)**

(74) Representative: **Hoijtink, Reinoud et al**
**OCTROOIBUREAU ARNOLD & SIEDSMA**
**Sweelinckplein 1**
**NL-2517 GK Den Haag(NL)**

(54) **Apparatus for manufacturing iron by melting and reduction.**

(57) An apparatus for manufacturing iron by melting and reduction and by the use of a general coal or a low-grade coke as a reducing fuel for a melting/reduction furnace which comprises an oxygen preparation device for feeding oxygen for the combustion of the reducing fuel, a gas turbine having an electricity generator for burning an exhaust gas as a fuel gas discharged from the melting/reduction furnace with oxygen fed from the oxygen preparation device, a heat exhaust boiler and a stream turbine having an electricity generator for recovering the sensible heat of an exhaust gas discharged from the gas turbine, and a carbon dioxide gas liquefying means for compressing/cooling an exhaust gas from the heat exhaust boiler to liquefy a carbon dioxide gas.

F I G. I

## FIELD OF THE INVENTION AND RELATED ART STATEMENT

The present invention relates to an apparatus for manufacturing iron by melting and reduction which employs a general coal or a low-grade coke as a reducing fuel, and more specifically, it relates to an apparatus for manufacturing iron by melting and reduction which is contrived so as to effectively utilize a gas discharged from an iron manufacturing process.

Conventional iron manufacturing techniques are mainly based on iron manufacturing methods using blast furnaces.

In these iron manufacturing methods using blast furnaces, an expensive coking coal which is less reserved in nature is used as fuel, and air is utilized as an oxidizing agent for this fuel.

However, the above-mentioned conventional iron manufacturing method using the blast furnace utilizes air as the oxidizing agent for the fuel as mentioned above, and the gas discharged from the system contains about 73% of $N_2$ in addition to $CO_2$. Furthermore, the amount of the discharged gas is inevitably as much as about 3000 $Nm^3$ per ton of pig iron.

In the meantime, much attention has recently been paid to the problem of Earth warming. One of its causes is a greenhouse effect, and the largest cause of the greenhouse effect is indicated to be the discharge of $CO_2$.

Accordingly, the two measures of inhibiting the generation of $CO_2$ and properly treating the generated $CO_2$ are required at the time of the iron manufacture.

As the former measure of inhibiting the generation of $CO_2$, it can be considered to use a reducing material for an iron ore other than a coal (coke). However, the employment of, for example, a natural gas or an $H_2$ gas as the reducing material is economically impractical, because such a gas is expensive.

Furthermore, the latter measure of properly treating the generated $CO_2$ is also economically impractical, because the gas to be treated is a mixed gas containing $CO_2$ and a large amount, i.e., about 70% or more of $N_2$ and a large-scale $CO_2$ removal treatment device is required to remove $CO_2$ alone from the gas mainly comprising obstructive $N_2$.

## OBJECT AND SUMMARY OF THE INVENTION

An object of the present invention is to provide an apparatus for manufacturing iron by melting and reduction and by the use of a general coal or a low-grade coke by which an exhaust gas can be effectively utilized and the diffusion of a $CO_2$ gas into the atmosphere can be inhibited.

A first constitution of an apparatus for manufacturing iron by melting and reduction of the present invention by which the above-mentioned object can be achieved is directed to an apparatus for manufacturing iron by melting and reduction and by the use of a general coal or a low-grade coke as a reducing fuel for a melting/reduction furnace which comprises an oxygen preparation device for feeding oxygen for the combustion of the reducing fuel, a gas turbine for burning an exhaust gas as a fuel gas discharged from the melting/reduction furnace with oxygen fed from the oxygen preparation device, a heat exhaust boiler and a stream turbine having an electricity generator for recovering the sensible heat of an exhaust gas discharged from the gas turbine, and a carbon dioxide gas liquefying means for compressing/cooling an exhaust gas from the heat exhaust boiler to liquefy a carbon dioxide gas.

A second constitution of an apparatus for manufacturing iron by melting and reduction of the present invention is directed to an apparatus for manufacturing iron by melting and reduction and by the use of a general coal or a low-grade coke as a reducing fuel for a melting/reduction furnace which comprises an oxygen preparation device for feeding oxygen for the combustion of the reducing fuel, a gas-fired boiler equipped with a stream turbine for burning an exhaust gas as a fuel gas discharged from the above-mentioned melting/reduction furnace with oxygen fed from the oxygen preparation device and having an electricity generator for recovering the sensible heat of the exhaust gas, and a carbon dioxide gas liquefying means for compressing/cooling the exhaust gas from the gas-fired boiler to liquefy a carbon dioxide gas.

According to the apparatus for manufacturing iron by melting/reduction regarding the above-mentioned first constitution of the present invention, oxygen from the oxygen preparation device is fed to the melting/reduction furnace using the general coal or the low-grade coke as the reducing fuel to melt the iron ore which is thrown into the furnace.

Next, the fed oxygen is utilized together with the high-temperature exhaust gas as the fuel gas discharged from the melting/reduction furnace to produce a combustion gas and to thereby drive the gas turbine.

The exhaust gas discharged from the gas turbine after the combustion still has a high temperature and the large sensible heat. Therefore, when the exhaust gas is fed to the heat exhaust boiler, water vapor is obtained and the stream turbine is rotated by this water vapor to generate electricity.

On the other hand, the exhaust gas discharged from the above-mentioned heat exhaust boiler is

mainly composed of $CO_2$ and $H_2O$, and $H_2O$ is removed by cooling and $CO_2$ is converted into a liquefied carbon dioxide gas by compression and cooling, with the result that the discharge of $CO_2$ into the atmosphere can be prevented.

According to the apparatus for manufacturing iron by melting/reduction regarding the above-mentioned second constitution of the present invention, the general coal which is the reducing fuel is fed to the melting/reduction furnace together with oxygen to melt the iron ore, as described above.

Next, the exhaust gas discharged from the melting/reduction furnace is directly fed to the gas-fired boiler. In this boiler, the sensible heat of the exhaust gas after the combustion is recovered and the water vapor is obtained, and the stream turbine is then rotated by this water vapor to generate electricity.

In this connection, most of the exhaust gas from the above-mentioned gas-fired boiler is $CO_2$ as mentioned above, and therefore the exhaust gas can be subjected to compression and cooling to obtain a liquefied carbon dioxide gas.

As described above, the apparatus for manufacturing iron by melting/reduction according to the present invention is equipped with an oxygen preparation device, a composite electricity generator and a means for liquefying a carbon dioxide gas, and therefore a general coal such as an inexpensive coal can be used to manufacture iron. Furthermore, an exhaust gas can be converted into a liquefied carbon dioxide gas having a small volume which can be easily transported, which permits the achievement of a desired treatment without any harm. In addition, it can be prevented to discharge $CO_2$ into the atmosphere.

Moreover, in the process in which the exhaust gas discharged from a melting/reduction furnace is liquefied, sensible heat and latent heat which the exhaust gas has can be effectively converted into electric power by a composite electricity generator. In consequence, the present invention is very beneficial from the viewpoints of the environmental protection of the earth and economy.

BRIEF DESCRIPTION OF THE DRAWINGS

Fig. 1 shows a conceptional view of an apparatus for manufacturing iron by melting/reduction regarding the first constitution of the present invention; and
Fig. 2 shows a conceptional view of an apparatus for manufacturing iron by melting/reduction regarding the second constitution of the present invention.

DETAILED DESCRIPTION OF PREFERRED EMBODIMENTS

Now, a suitable embodiment of an apparatus for manufacturing iron by melting/reduction of the present invention will be described with reference to the drawings.

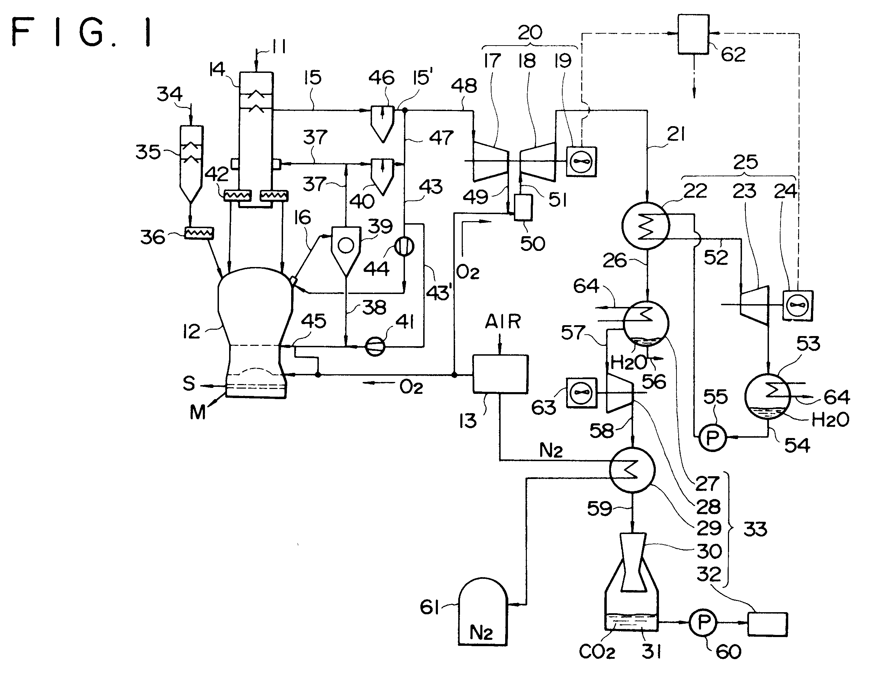

Fig. 1 shows a conceptional view of an apparatus for manufacturing iron by melting/reduction regarding the first constitution of the present invention.

As shown in Fig. 1, this apparatus comprises a melting/reduction furnace 12 for melting an iron ore, an oxygen preparation device 13 for preparing oxygen $O_2$ which will be fed to the melting/reduction furnace 12, a preliminary reduction furnace 14 for preliminarily reducing the iron ore 11, and a first electricity generator means 20 for utilizing a furnace top exhaust gas 15 from the preliminary reduction furnace 14 and an exhaust gas 16 from the above-mentioned melting/reduction furnace 12 to generate electricity. This electricity generator means 20 is composed of a compressor 17, a gas turbine 18 and an electricity generator 19. Furthermore, the above-mentioned apparatus is provided with a second electricity generator means 25 which utilizes the exhaust gas 21 from the first electricity generator means 20 to generate electricity and which has a heat exhaust boiler 22, a steam turbine 23 and an electricity generator 24.

Additionally, the apparatus of the present invention is provided with a carbon dioxide gas liquefying means 33 comprising a condenser 27, a compressor 28, a heat exchanger 29, a carbon dioxide gas liquefying device 30 and a liquefied carbon dioxide gas storage tank 32. An exhaust gas 26 containing $CO_2$ from the heat exhaust boiler 22 is concentrated to a liquefied carbon dioxide gas 31 with the aid of the above-mentioned members 27, 28, 29 and 30, and the thus liquefied carbon dioxide gas 31 is then stored in the storage tank 32.

The above-mentioned melting/reduction furnace 12 is connected to a rock hopper 35 for leading a reducing fuel, i.e., a general coal or a low-grade coke to the furnace 12, and the reducing fuel 34 is fed from this rock hopper 35 to the melting/reduction furnace 12 via a screw feeder 36.

On the exhaust route of the exhaust gas 16 discharged from the melting/reduction furnace 12, there is provided a cyclone 39 for separating the exhaust gas 16 into a reducing gas 37 and a reducing ion 38 in the state of fine particles. The reducing gas 37 which has been separated by the cyclone 39 is led to the preliminary reducing furnace 14 for preliminarily reducing the iron ore 11 and then a scrubber 40. On the other hand, the reducing ion fine particles 38 separated by the cyclone 39 are returned to the melting/reduction furnace 12 by means of a fan 41.

The above-mentioned reducing gas 37 has a temperature of about 800°C, and as the preliminary reduction furnace 14 into which this gas 37 is introduced, there is used, for example, a shaft type reduction furnace. The iron ore 11 thrown into the preliminary reduction furnace 14 is preliminarily reduced in a solid state up to a reduction ratio of about 90%. The thus preliminarily reduced iron ore 11 is cut by a high-temperature cutting device 42 disposed under the preliminary reduction furnace 14, while the iron ore is maintained at a high temperature, and the iron ore 11 is further thrown into the melting/reduction furnace 12 without contacting with the atmosphere.

In this melting/reduction furnace 12, the coal which is the reducing fuel 34 is gasified and burnt with the aid of oxygen $O_2$ blown from the bottom of the furnace 12 to heighten the temperature therein and to produce a reducing gas. This reducing gas causes the preliminarily reduced iron ore to be reduced to nearly 100%, to be melted, and to be carburized, whereby a melted pig iron is obtained. Afterward, this pig iron is taken out as a pig iron M from the bottom of the furnace. Sulfur taken in by the coal becomes compounds such as FeS, MnS and CaS, and these compounds are discharged from the furnace together with the pig iron M and the slug S. In consequence, sulfur is scarcely contained in the exhaust gas from the furnace.

The exhaust gas 16 discharged from the melting/reduction furnace 12 had a high temperature of about 1500°C, and it is a reducing gas Containing CO and $H_2$ as the main components. Therefore, after the reducing ion fine particles 38 have been separated by the cyclone 39, most of the exhaust gas 16 can be blown as the clean reducing gas 37 into the preliminary reducing furnace 14. The remaining exhaust gas is delivered to the scrubber 40 for the purpose of cleaning and dehydrating this gas. A part of the treated exhaust gas is used as a temperature regulation gas 43 to be added to the reducing gas 37 for the preliminary reducing furnace 14. That is, the partial gas is forwarded via a fan 44 and then mixed with the exhaust gas 16 from the melting/reduction furnace 12, whereby the temperature of the exhaust gas 16 is regulated to about 800°C. The reason why such a temperature regulation is required is that the temperature of the exhaust gas 16 discharged from the melting/reduction furnace 12 is as high as about 1500°C, as described above, and this temperature is too high as that of the exhaust gas for the preliminary reducing furnace 14.

A part 43' of the temperature regulation gas 43 is blown into the furnace through the fan 41 and a tuyere 45 in order to return, to the melting/reduction furnace 12, the reducing ion fine particles 38 separated in the cyclone 39.

The furnace top exhaust gas 15 formed at the time of the reduction of the iron ore 11 and having a temperature of from 200 to 300°C is released from the top portion of the preliminary reduction furnace 14. This furnace top exhaust gas 15 contains unburnt components such as CO and $H_2$ in addition to $CO_2$ and $H_2O$, and therefore it is subjected to dehydration and dust removal in a scrubber 46 to become a clean gas 15'. This clean gas 15' is mixed with the clean gas 47 cleaned in the scrubber 40. Afterward, the mixed gas is delivered as a fuel gas 48 for the gas turbine 18 to the compressor 17, and here it becomes a compressed fuel gas 49.

Afterward, this compressed fuel gas 49 is delivered to a combustor 50 together with oxygen $O_2$, and here it becomes a combustion gas 51 having a high pressure. This combustion gas 51 is delivered to the gas turbine 18 to drive this gas turbine 18, whereby a compressor 17 and an electricity generator 19 which are connected to the gas turbine 18 are driven to achieve the first electricity generation.

The exhaust gas 21 discharged from the gas turbine 18 still has high-temperature sensible heat. Thus, this exhaust gas is then forwarded to the heat exhaust boiler 22 to form a steam 52. Afterward, this stream 52 is delivered to the steam turbine 23 to drive the electricity generator 24, thereby achieving the second electricity generation.

Furthermore, the steam 52 is delivered to a condenser 53 to become a condensed water 54. This condensed water 54 is fed as a feed water for the steam again to the heat exhaust boiler 22 by means of a pump 55.

On the other hand, the exhaust gas 26 discharged from the heat exhaust boiler 22 comprises a large amount of $CO_2$ and a slight amount of $H_2O$, and thus this exhaust gas 26 is passed through the condenser 27 to remove $H_2O$ in the state of a drain 56. The $CO_2$ content of the gas 57 passed through the condenser 27 is about 95% or more. Under such conditions, it is possible to liquefy this gas easily from technical and economical standpoints. Therefore, this gas is passed through a carbon dioxide gas liquefying means 33 to liquefy itself.

That is, the gas 57 from the condenser 27 is first delivered to the compressor 28 to compress itself, whereby a compressed $CO_2$ gas 58 is formed. Afterward, this compressed $CO_2$ gas is forwarded to the heat exchanger 29 to cool itself. A cooled gas 59 is led to the carbon dioxide gas liquefying device 30 to liquefy itself, thereby forming the liquefied carbon dioxide gas 31. Afterward, this liquefied carbon dioxide gas 31 is forwarded to the liquefied carbon dioxide gas storage tank 32 by means of a pump 60 and then stored therein.

The volume of this liquefied carbon dioxide gas is very small, about 1/600 of that of the gaseous substance. Therefore, the liquefied carbon dioxide gas is in the most suitable state in points of storage and transportation. For this reason, the liquefied carbon dioxide gas can be utilized for various purposes. For example, the liquefied carbon dioxide gas can be introduced into an old oil field to effectively recover petroleum, and it can be easily transported and also discarded into an abandoned oil field or the sea without any harm. As a result, the diffusion of the $CO_2$ gas to the atmosphere can be inhibited.

Aa a refrigerant for the heat exchanger 29 of the compressed carbon dioxide gas 58, there may be used, for example, a nitrogen gas $N_2$ which is a by-product in the oxygen preparation device 13. In this case, the nitrogen gas $N_2$ which has received heat in the heat exchanger 29 is stored in a nitrogen storage tank 61 and will be used for various applications. As the raw material of oxygen, air is used, and oxygen $O_2$ and nitrogen $N_2$ are obtained in the oxygen preparation device 13.

Electric power from the respective electricity generators 19, 24 which is obtained by the above-mentioned first and second electricity generator means 20, 25 is delivered to an electricity receiving device 62 and further fed therefrom to a driving motor 63 for the compressor 28 or a driving motor (not shown) for the oxygen preparation device 13, and it is then utilized thereby. The remaining electric power can be used for other applications (e.g., for other plants and neighboring homes). Furthermore, a warm liquid 64 is formed in the steam condenser 53 and the condenser 27, but this warm liquid can also be utilized as a warm liquid source for neighboring homes.

Therefore, when installed in the vicinity of a town, this system is more effective.

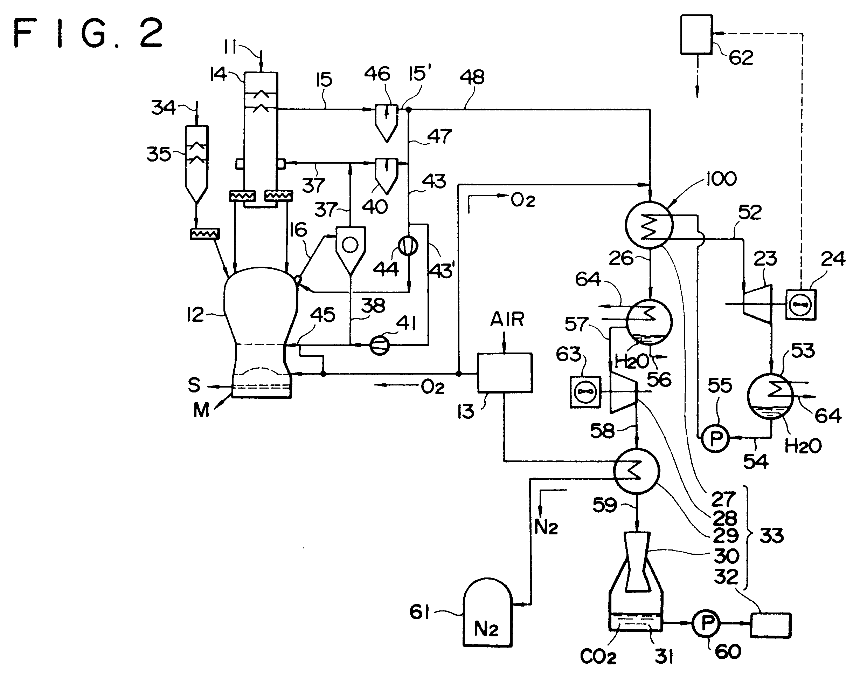

Next, one suitable embodiment of an apparatus for manufacturing iron by melting/reduction regarding the second constitution of the present invention will be described in reference to Fig. 2.

Fig. 2 shows a conceptional view of an apparatus for manufacturing iron by melting/reduction regarding the present embodiment. In Fig. 2, the same numerals as in Fig. 1 are attached to members having the same functions as the respective members of the apparatus for manufacturing iron by melting/reduction regarding the first constitution shown in Fig. 1, and descriptions which have already been made with regard to Fig. 1 will be omitted.

In the apparatus for manufacturing iron by melting/reduction shown in Fig. 2, the clean gas 47 obtained by cleaning the exhaust gas 16 discharged from the melting/reduction furnace 12 is mixed with the gas 15' obtained by cleaning the furnace top exhaust gas 15 from the preliminary reduction furnace 14 to form a fuel gas 48, and this fuel gas 48 is then directly introduced into a gas-fired boiler 100 to recover the sensible heat of the exhaust gas. In this embodiment, the heat exhaust boiler 22 shown in Fig. 1 is replaced with the gas-fired boiler 100.

In the case of the this apparatus, the fuel gas 48 which is discharged from the furnaces 12, 14 and then cleaned and which contains unburnt CO and $H_2$ is burnt with the aid of the oxygen gas $O_2$ from the oxygen preparation device 13 in the gas-fired boiler 100 to generate the steam 52, which will be used for electricity generation.

Also in this case, the composition of the exhaust gas 26 from the gas-fired boiler 100 is almost $CO_2$, and a nitrogen gas is scarcely contained in the gas 26, as described above. Accordingly, this exhaust gas is easily liquefied by the carbon dioxide gas liquefying means 33 having the carbon dioxide gas liquefying device 30, so that the diffusion of the $CO_2$ gas to the atmosphere can be inhibited.

## Claims

1. An apparatus for manufacturing iron by melting and reduction and by the use of a general coal or a low-grade coke as a reducing fuel for a melting/reduction furnace which comprises:

    an oxygen preparation device for feeding oxygen for the combustion of the reducing fuel,

    an electricity generation device for utilizing an exhaust gas discharged from the melting/reduction furnace to generate electricity, and

    a carbon dioxide gas liquefying means for compressing/cooling the exhaust gas from the electricity generation device to liquefy a carbon dioxide gas.

2. The apparatus for manufacturing iron by melting and reduction according to Claim 1) wherein the oxygen preparation device prepares oxygen from air which is a raw material.

3. The apparatus for manufacturing iron by melting and reduction according to Claim 1) wherein the electricity generation device comprises a gas turbine which burns an exhaust gas discharged from the melting/reduction furnace with oxygen fed from the oxygen preparation device and which has an electricity generator drivable by the combustion gas, and

    a stream turbine having a heat exhaust boiler for utilizing the heat of an exhaust gas discharged from the gas turbine to form steam, and an electricity generator which is driven by the steam.

4. The apparatus for manufacturing iron by melting and reduction according to Claim 1) wherein the electricity generation device comprises a gas-fired boiler for burning an exhaust gas discharged from the melting/reduction furnace with oxygen fed from the oxygen preparation device, and

a stream turbine having an electricity generator which is driven by steam generated from the gas-fired boiler.

5. The apparatus for manufacturing iron by melting and reduction according to Claim 1) wherein the carbon dioxide gas liquefying means comprises a compressor for compressing the exhaust gas from the electricity generation device,

a heat exchanger for cooling the compressed gas, and

a carbon dioxide gas liquefying device for liquefying the cooled gas.

# FIG. 1

EP 0 488 429 A2

FIG. 2